# FASCICULE DE BREVET EUROPEEN

(11) **EP 3 914 129 B1**
(45) Date de publication et mention de la délivrance du brevet: **01.03.2023**
(21) Numéro de dépôt: 20706571.5
(22) Date de dépôt: 20.01.2020
(51) Int. Cl.: A47F 7/02, B62J 11/00, F16M 13/02, B65D 63/10, F16B 2/08, F16L 3/233

(54) **DISPOSITIF DE SUPPORT POUR LUNETTES**
BRILLENUNTERSTÜTZUNGSVORRICHTUNG
SPECTACLES SUPPORT DEVICE

(30) Priorité: 23.01.2019 FR 1900569
(43) Date de publication de la demande: 01.12.2021
(73) Titulaire: König, Laurent, 13109 Simiane-Collongue (FR)
(72) Inventeur: König, Laurent, 13109 Simiane-Collongue (FR)
(74) Mandataire: Weber, Etienne Nicolas
(86) Numéro de dépôt international: PCT/FR2020/050069
(87) Numéro de publication internationale: WO 2020/152412

(56) Documents cités:
- WO-A1-2014/201425
- DE-C1- 4 428 437
- FR-A1- 3 037 554
- JP-A- 2001 328 578
- JP-B1- 5 960 874
- US-A1- 2012 235 380
- US-A1- 2015 267 862
- US-A1- 2016 281 919

## Description

### Domaine technique

La présente invention concerne un dispositif de support pour lunettes. Le dispositif de support pour lunettes de l'invention est un dispositif adapté en particulier à la fixation d'une paire de lunettes sur le cadre ou le guidon d'un vélo ou d'une motocyclette. En effet, le dispositif de support est destiné à être fixé autour d'un barreau ou d'un tube, et de préférence d'un tube de section circulaire. Par extension, le dispositif de support peut trouver son utilité pour la fixation d'une paire de lunettes sur tout équipement ou véhicule présentant un guidon, ou plus généralement des barreaux ou une tubulure qui s'y apparente.

L'invention trouve des applications notamment dans le cadre de pratiques sportives, particulièrement de vélo, et de vélo tout terrain, lors desquelles un utilisateur peut avoir besoin d'un support pour recevoir temporairement, ses lunettes de vue, ses lunettes de protection, ou ses lunettes de soleil, et les maintenir à portée de main.

Par extension, le dispositif de l'invention peut également servir au support d'autres objets de forme allongée, tels qu'un stylo ou des ciseaux.

### Etat de la technique antérieure

Un état de la technique proche de l'invention peut être illustré par le brevet FR 3 037 554.

Ce document concerne un dispositif de maintien de lunettes sur une partie d'une bicyclette. Le dispositif se présente sous la forme d'une lanière pouvant être repliée autour d'un guidon de la bicyclette en formant une boucle. La lanière présente un appendice d'extrémité pourvue d'un passant, sous la forme d'une fente, permettant l'insertion d'une branche d'une paire de lunettes.

Lorsque qu'une branche de la paire de lunette est insérée dans le passant du dispositif de maintien, la paire de lunettes se trouve suspendue au guidon, ou plus généralement à la tubulure autour de laquelle est fixé le dispositif de maintien.

### Exposé de l'invention

L'invention, qui s'inscrit dans le contexte d'un tel dispositif de support, procède de la mise en évidence d'un risque de mouvement excessif de la paire de lunettes sur son support. Il peut s'agir, en particulier, d'un phénomène de balancement de la paire de lunettes dû notamment à un pivotement de la branche de lunettes dans le passant qui la reçoit.

Le mouvement de la paire de lunettes sur son support ne compromet pas sa fixation au support mais peut s'avérer gênant pour l'utilisateur. La gêne peut être simplement visuelle. Elle peut également être physique si la paire de lunettes vient à heurter la jambe ou le bras de l'utilisateur, par exemple.

Enfin, un mouvement inopiné de la paire de lunettes sur son support, par exemple, lors d'une pratique sportive de vélo sur un terrain accidenté, peut occasionner des heurts entre la paire de lunettes et des objets de son environnement immédiat et provoquer des détériorations.

L'invention a pour but de mitiger ces difficultés et de proposer un dispositif de support pour lunettes amélioré visant notamment à limiter ou à interdire le balancement des lunettes.

Pour atteindre ces buts l'invention propose plus précisément un dispositif de support pour lunettes, présentant une première face et une deuxième face opposée à la première face, et comprenant :
- une lanière avec une extrémité proximale et une extrémité distale,
- un appendice proximal de la lanière et un appendice distal de la lanière, formant respectivement l'extrémité proximale et l'extrémité distale de la lanière, l'appendice proximal et l'appendice distal étant reliés par un corps de lanière,
- un passant pour branche de lunettes ménagé dans l'appendice proximal,
- au moins un ajourage d'au moins l'un du corps de lanière et de l'appendice distal de la lanière, autorisant un engagement de l'appendice proximal de la lanière au travers du corps de lanière, respectivement de l'appendice distal de la lanière,
- un verrou de maintien de l'appendice proximal au travers dudit ajourage, dans une position d'utilisation du dispositif de support.

Conformément à l'invention, le dispositif comprend au moins un premier relief formant une butée d'immobilisation de branche de lunettes au voisinage du passant dans ladite position d'utilisation du dispositif de support, le premier relief étant ménagé sur la première face du dispositif de support, en formant une saillie sur la première face, à l'aplomb d'un bord distal de l'ajourage tourné vers l'extrémité distale de la lanière.

La ou les butées d'immobilisation sont de préférence adjacentes au passant, dans la position d'utilisation du dispositif de support.

De manière générale, dans la description qui suit, les adjectifs distal et proximal sont utilisés pour distinguer des parties du dispositif de support en fonction de leur caractère proche ou distant du passant susceptible de recevoir une branche de lunettes.

On entend par passant pour branche de lunettes, une entaille, une fente ou un orifice, se trouvant sur l'appendice proximal, et permettant l'introduction d'une banche d'une paire de lunettes. C'est par l'intermédiaire de la branche qui traverse le passant que la paire de lunettes se trouve suspendue au dispositif de maintien. En particulier, le passant peut se présenter sous la forme d'une fente à lèvres traversant l'appendice proximal de part en part.

Une branche de la paire de lunettes est de préférence introduite dans le passant jusqu'au voisinage de son articulation avec la monture des verres, de manière que le barycentre de la paire de lunette se trouve plus bas que son point de suspension au dispositif de support.

Comme mentionné précédemment, et par extension, le dispositif de support de l'invention peut également servir au support d'autres objets de forme générale allongée, ou présentant un appendice allongé, tels qu'un stylo, une paire de ciseaux, ou un petit outil à main, par exemple. Aussi la mention d'une paire de lunette n'est pas considérée comme excluant une utilisation du support pour d'autres objets.

L'appendice proximal et l'appendice distal de la lanière sont de préférence un peu plus larges que le corps de la lanière de manière à en faciliter leur saisie pour la mise en place de la lanière autour d'un support de fixation, et en particulier autour d'un tube.

L'appendice proximal, l'appendice distal et le corps de lanière peuvent être réalisés d'une seule pièce et, de préférence en un matériau élastique, tel qu'un plastique souple, un élastomère, une silicone, une résine ou du caoutchouc, par exemple.

Par ailleurs, lorsque le dispositif est adapté à un barreau ou un tube d'un véhicule, et en particulier le guidon d'un vélo, le corps de lanière peut présenter une longueur égale par valeurs inférieures à un périmètre d'une section droite du barreau ou du tube.

On considère que la longueur est égale, par valeurs inférieures, au périmètre du tube lorsqu'elle est soit égale, soit légèrement inférieure au périmètre. Lorsqu'elle est légèrement plus courte que le périmètre du tube, la lanière doit être légèrement étirée pour l'engagement du verrou de maintien. Cet étirement favorise une fixation ajustée et permet d'augmenter des forces de frottement ou d'adhésion de la lanière contre le tube. Un éventuel risque de glissement du dispositif de support sur le tube peut ainsi être réduit ou écarté.

Le verrou de maintien de l'appendice proximal au travers de l'ajourage peut comporter un organe dédié tel qu'un bouton à pression, par exemple, ou un crochet. Toutefois, et de manière préférée il peut s'agir d'un verrou fonctionnant simplement par complémentarité de forme des parties engagées.

En particulier, l'ajourage peut comporter un bord distal tourné vers l'extrémité distale de la lanière qui vient en butée contre l'appendice proximal lorsque l'appendice proximal est engagé dans l'ajourage. Par ailleurs, et comme cela apparaît encore dans la suite de la description, l'appendice proximal peut présenter un épaulement faisant saillie sur le corps de lanière. L'épaulement vient alors également en appui contre l'appendice distal de la lanière, ou contre le corps de lanière de part et d'autre de l'ajourage.

L'épaulement de l'appendice proximal peut être légèrement replié ou rabattu pour faciliter son passage dans l'ajourage de la lanière. Il vient ensuite s'appuyer sur les bords de l'ajourage lorsque l'appendice proximal est entièrement engagé. La position entièrement engagée correspond à la position d'utilisation du dispositif de support.

La lanière peut présenter un seul ou une pluralité d'ajourages soit sur le corps de lanière, notamment au voisinage de l'extrémité distale, soit sur l'appendice distal. La présence de plusieurs ajourage permet, le cas échéant, d'adapter le dispositif de support à différents diamètres de tube autour desquels la lanière peut former une boucle de fixation. Dans la suite de la description, la référence à un ajourage au singulier ne préjuge pas du nombre d'ajourages du dispositif de support.

De manière avantageuse, le dispositif de support comporte au moins un premier relief formant une première butée, le premier relief étant ménagé sur la première face du dispositif de support, à l'aplomb d'un bord distal de l'ajourage tourné vers l'extrémité distale de la lanière.

Dans la forme étendue et sensiblement plane du dispositif de support le premier relief se trouve à distance de l'appendice proximal. Cependant, dans la position d'utilisation du support, c'est à dire lorsque le corps de lanière entoure un tube ou un barreau en formant une boucle, et que l'appendice proximal se trouve engagé dans l'ajourage, le premier relief se trouve au voisinage de l'appendice proximal et donc au voisinage du passant pour branche de lunettes pratiqué dans l'appendice proximal. Le premier relief forme alors une butée, appelée première butée. De par sa position, la première butée est apte à limiter une amplitude de mouvement, et en particulier une amplitude de pivotement d'une branche de lunettes, lorsque la branche de lunettes engagée dans le passant.

Lorsque plusieurs ajourages sont prévus dans le dispositif de support, de manière à l'adapter à plusieurs diamètres de tubes ou de barreaux, un "premier relief' peut être prévu au voisinage de chacun des ajourages. Toutefois un seul des premiers reliefs seulement constituera une butée pour la branche de lunettes, en fonction de l'ajourage au travers duquel est engagé l'appendice proximal dans la position d'utilisation.

Selon un perfectionnement, le premier relief peut présenter, par rapport à la première face du dispositif de support une hauteur sensiblement égale à une distance séparant l'épaulement de l'appendice proximal du passant pour branche de lunettes. En effet, comme l'épaulement de l'appendice proximal fixe la position de l'appendice distal par rapport à l'ajourage, dans la position d'utilisation, le fait que la hauteur du premier relief soit égale à la distance entre l'épaulement et le passant pour branche de lunettes, fait que la surface du premier relief formant la première butée se trouve exactement à l'aplomb du passant dans la position d'utilisation.

Cette position permet alors de réduire au minimum le débattement de la branche de lunettes sans toutefois entraver son insertion dans le passant.

Selon un autre aspect de l'invention, le dispositif de support peur comporter, en plus du premier relief, ou à la place du premier relief, un deuxième relief ménagé sur la deuxième face du dispositif de support, et formant une deuxième butée à l'aplomb du passant pour branche de lunettes.

Le deuxième relief peut être formé sur l'appendice proximal ou au voisinage de l'appendice proximal en s'étendant sur le corps de lanière. La deuxième buttée se trouve en permanence à l'aplomb du passant pour branche de lunettes sachant que le passant est également sur l'appendice proximal.

Lorsque le dispositif comprend également le premier relief évoqué précédemment, le premier et le deuxième relief se trouvent respectivement de part et d'autre du passant, dans la position d'utilisation, respectivement sur la première et la deuxième face du dispositif de support. Les première et deuxième butées s'opposent ainsi au débattement d'une branche de lunettes sur les deux côtés du passant, en limitant ou en interdisant ainsi tout mouvement de balancement de la branche de lunettes, et par extension de l'ensemble de la paire de lunettes dans le passant du dispositif de support.

De manière avantageuse, le dispositif de l'invention peut comporter un troisième relief, ménagé sur la première face du dispositif de support, au voisinage d'une jonction du corps de lanière avec l'appendice proximal, une distance séparant le troisième relief de l'épaulement de l'appendice proximal étant égale à une épaisseur de la lanière au voisinage de l'ajourage, le troisième relief formant un étai de l'appendice distal au droit du premier relief dans la position d'utilisation du dispositif de support. Dans ce cas, en effet, le troisième relief peut servir d'appui pour l'appendice distal dans la position d'utilisation, de manière à éviter ou limiter sa déflexion sous l'effet d'une contrainte exercée par une branche de lunettes insérée dans le passant.

Comme l'espacement entre troisième relief et l'épaulement de l'appendice proximal est ajusté à l'épaisseur de la lanière, et notamment son épaisseur au voisinage de l'ajourage, fait que cet espacement est entièrement comblé par la lanière lorsque l'appendice proximal est engagé à travers l'ajourage. Ainsi, dans la position d'utilisation, le troisième relief vient en appui contre la lanière à l'opposé du premier relief, situé au voisinage de l'ajourage. Le troisième relief constitue ainsi un étai ou un appui pour le premier relief. Il permet de limiter ou d'interdire une déformation de la lanière au niveau de l'ajourage et donc de son extrémité distale qui se trouve également au voisinage du passant pour branche de lunettes dans la position d'utilisation.

La limitation de la déformation de la lanière est particulièrement bienvenue pour une lanière souple. Elle permet d'éviter que, sous l'effet de mouvements brusques de la structure à laquelle est fixé le dispositif de support, par exemple, un mouvement brusque d'un guidon de vélo, la paire de lunette finisse par bouger en faisant fléchir l'appendice distal de la lanière ou plus généralement la partie de la lanière qui porte le premier relief contre lequel s'appuie la branche de la lunette.

Par retour au deuxième relief, déjà évoqué, celui-ci se trouve sur la deuxième face du dispositif de support de lunettes, qui est également la face tournée vers le tube ou le guidon autour duquel est enroulée la lanière du dispositif de support lorsque celui-ci est en position d'utilisation. Dans la suite de la description, et par simplification il est ainsi fait référence au "guidon" sans pour autant préjuger de la nature du barreau ou du tube recevant le dispositif de support.

Aussi, et selon un mode de réalisation avantageux du deuxième relief, celui-ci peut présenter une forme en coin avec une hauteur de relief diminuant à l'opposé de deuxième butée du deuxième relief. En d'autres termes, la hauteur du coin diminue en direction de l'extrémité distale de la lanière. Cette forme particulière du deuxième relief, permet de maintenir l'appendice proximal et l'appendice distal sensiblement à angle droit lorsque le dispositif de support est dans sa position d'utilisation, en venant s'appuyer sur le guidon.

De manière plus précise encore, la forme en coin peut présenter un cintrage avec un rayon de courbure égal à celui d'un tube de fixation, en l'occurrence le guidon, auquel est destiné le dispositif. Ainsi lorsque la lanière forme une boucle autour du guidon, dans la position d'utilisation, le coin est serré contre le guidon et sa surface supérieure cintrée vient épouser la forme du guidon. Le deuxième relief est ainsi maintenu fermement et permet également de garantir la position perpendiculaire des extrémités proximale et distale, l'une par rapport à l'autre. Dans cette position, les première et deuxième butées peuvent être appliquées de manière optimale contre la branche d'une paire de lunettes lorsque celle-ci est engagée dans le passant.

Selon une possibilité de réalisation particulière de la lanière, le corps de lanière peut se présenter sous la forme de deux brins de lanière, et un espace entre les brins de lanière peut former ledit ajourage.

Ainsi pour verrouiller la lanière autour du guidon, il suffit d'engager l'appendice proximal entre les brins de lanière.

Dans ce cas, l'espace entre les brins de lanière au voisinage de l'appendice distal peut être ajusté de préférence à la largeur de la lanière au voisinage de la jonction du corps de lanière avec l'appendice proximal, pour un meilleur verrouillage de l'appendice proximal dans la position d'utilisation du dispositif de support.

Également, pour garantir un meilleur verrouillage, l'épaulement de l'appendice proximal peut être pourvu de gorges de réception des brins de lanière.

D'autres caractéristiques et avantages de l'invention ressortent de la description qui suit en références aux figures des dessins. Cette description est donnée à titre illustratif et non limitatif.

### Brève description des figures

La figure 1 est une perspective d'un dispositif de support conforme à l'invention.
La figure 2 est une vue selon sa deuxième face d'un dispositif de support conforme à l'invention, constituant une variante du dispositif de la figure 1.
La figure 3 est une vue latérale du dispositif de support de la figure 1.
La figure 4 est une vue latérale du dispositif de support des figures 1 et 3 dans une position d'utilisation lorsqu'il fixé autour d'un barreau, non représenté.
La figure 5 est une vue latérale partielle d'un dispositif de support conforme à l'invention et montre la fixation d'une paire de lunettes.
La figure 6 est une perspective d'un dispositif de support conforme à l'invention dans la position d'utilisation.
Les figures sont représentées en échelle libre.

### Description détaillée de modes de mise en oeuvre de l'invention

Dans la description qui suit, des parties identiques, similaires ou équivalentes des différentes figures sont repérées avec les mêmes signes de référence de manière à faciliter le report d'une figure à l'autre.

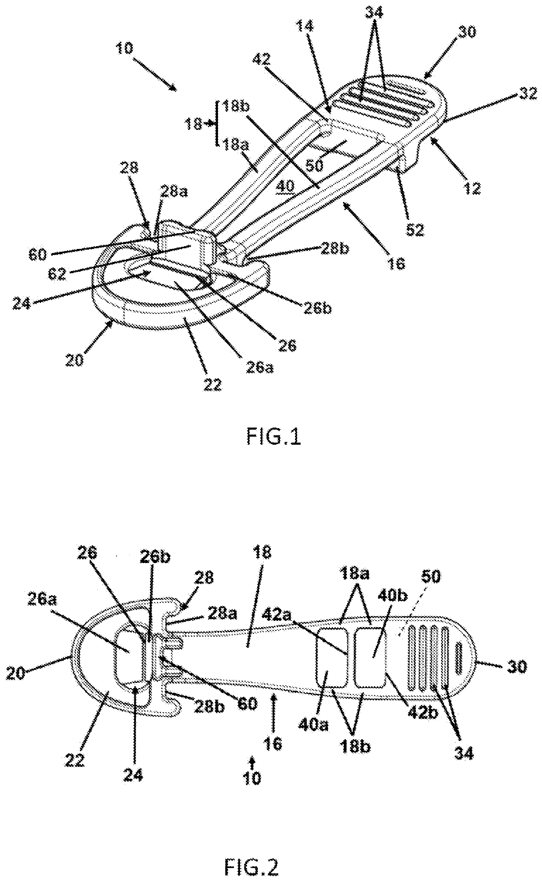

La figure 1 montre en perspective un dispositif de support 10 conforme à l'invention. Il présente une première face 12, tournée vers le bas sur la figure 1, et une deuxième face 14 tournée vers le haut sur la figure 1.

Le dispositif de support 10 comprend une lanière souple et flexible 16 avec un corps de lanière 18 formé de deux brins de lanière 18a, et 18b. La lanière s'étend entre une extrémité proximale 20 et une extrémité distale 30.

On peut noter également que le dispositif de support 10 présente une symétrie par rapport à un plan médian perpendiculaire à la première face 12 et à la deuxième face 14.

L'extrémité proximale 20 est formée par un appendice proximal 22, et l'extrémité distale est formée par un appendice distal 32. Dans l'exemple décrit, l'ensemble du dispositif est réalisé par moulage en une matière légèrement élastique, en l'occurrence en élastomère.

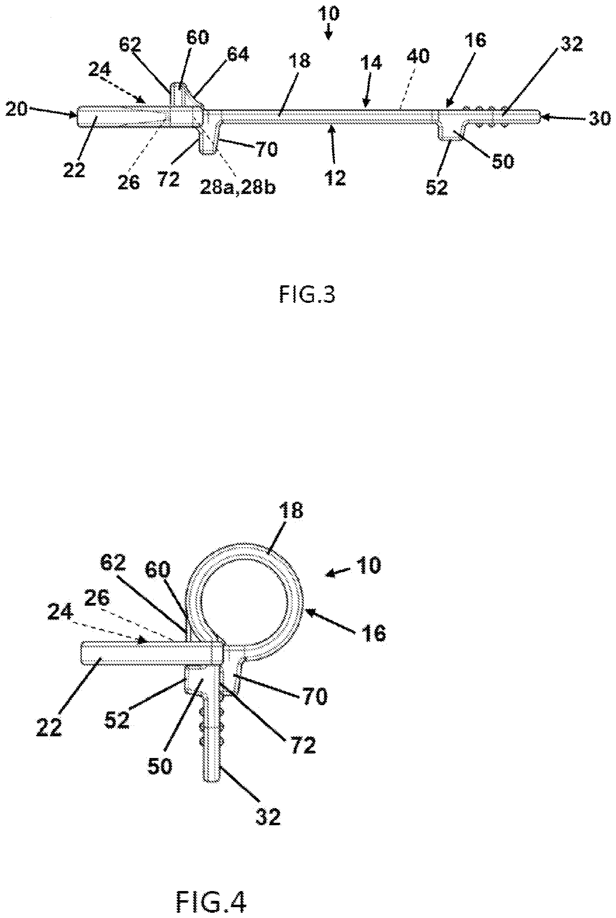

Un espacement entre les brins de lanière forme un ajourage 40 de la lanière 16 à travers lequel l'appendice proximal 22 peut être engagé. L'appendice proximal y est engagé après avoir disposé le corps de lanière 18 autour d'un tube ou d'un barreau, et en particulier autour du guidon d'un vélo, pour y fixer le dispositif de support. La longueur du corps de lanière est adaptée au périmètre du tube pris selon une section droite. Cet aspect est illustré avec les figures 4 à 6 décrites plus loin.

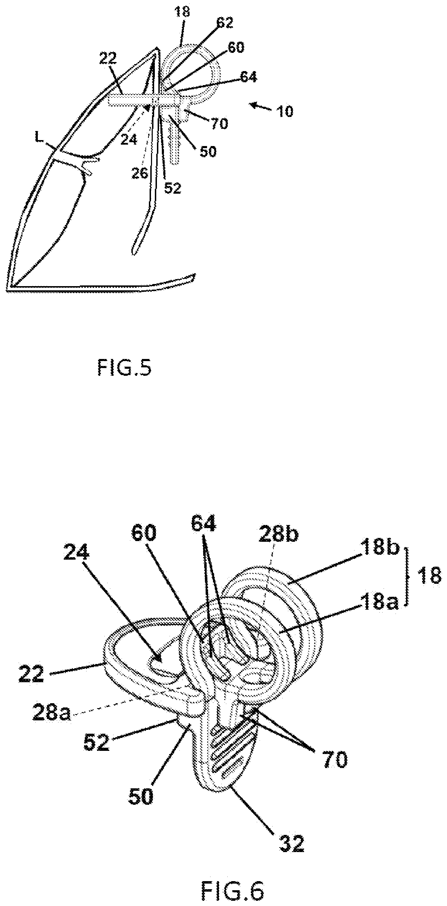

Un premier relief 50, sous la forme d'un bossage, forme une saillie sur la première face 12 du dispositif. Il se trouve au voisinage d'un bord distal 42 de l'ajourage 40. Le premier relief 50 forme une première butée 52 dont la fonction d'immobilisation d'une branche de lunettes apparaît plus clairement dans la suite de la description en référence notamment à la figure 5.

L'appendice proximal 22 comporte un passant 24 prévu pour l'insertion d'une branche de lunettes. Le passant 24 se présente comme une fine fente 26 délimitée par deux lèvres souples 26a, 26b.

Un deuxième relief 60 est formé sur la deuxième face 14 du dispositif de support. Il est disposé sur l'appendice proximal 22 et s'étend également en partie sur le corps de lanière 18. Le deuxième relief 60 forme une deuxième butée 62 à l'aplomb du passant 24 pour branche de lunettes, et plus précisément à l'aplomb de la fente 26 du passant 24.

Un verrou de maintien du dispositif de support comprend un épaulement 28, que l'appendice proximal 22 forme par rapport au corps de lanière 18 respectivement de part et d'autre du corps de lanière 18.

L'épaulement 28 est mieux visible sur la figure 2 qui montre une variante du dispositif de support 10.

Le verrou comprend également, et principalement, le bord distal 42 de l'ajourage 40 qui vient en appui contre la première face du dispositif de support. Plus précisément le bord distal 42 de l'ajourage vient en appui à la hauteur d'une jonction entre le corps de lanière 18 et l'appendice proximal 22 dans la position d'utilisation du dispositif de support.

Accessoirement, le verrou comprend encore les brins de lanière 18a, 18b qui viennent s'engager dans des gorges 28a, 28b de l'épaulement 28 dans la position d'utilisation du dispositif de support. Cet aspect est visible en particulier sur la figure 2.

Le verrou permet de maintenir le dispositif de fixation dans sa position d'utilisation enroulée autour d'un barreau ou d'un tube.

On peut encore noter sur les figures 1 et 2 la présence de nervures 34 sur l'appendice distal. Les nervures 34, dont la hauteur est inférieure à celle du premier et du deuxième relief, ont pour fonction de favoriser la saisie de l'appendice distal en vue de faciliter un léger étirement de la lanière 16 pour la mise en place du dispositif de support sur un barreau ou un tube et pour l'engagement du verrou. En effet la lanière est prévue de préférence légèrement plus courte que le périmètre du tube pour permettre, par son élasticité propre, et par un léger étirement, de la plaquer fermement contre le tube dans la position d'utilisation.

La figure 2, déjà évoquée montre une variante de réalisation du dispositif de l'invention. La lanière 16 présente deux ajourages 40a, 40b décalés l'un par rapport à l'autre le long d'un axe passant par le plan de symétrie du dispositif. Les deux ajourages 40a, 40b permettent chacun d'engager l'appendice proximal 22 et présentent chacun un bord distal 42a 42b, pouvant servir à retenir l'appendice proximal 22.

La présence de deux ajourages permet d'adapter le dispositif de support à des tubes de différents diamètres.

Les ajourages 40a, 40b sont chacun délimités latéralement par des brins de lanière 18a, 18b qui peuvent venir s'engager dans les gorges 28a, 28b de l'épaulement 28 de l'appendice proximal.

Dans le mode de réalisation de la figure 2, un premier relief 50 est ménagé au voisinage de l'ajourage 40b le plus proche de l'extrémité distale 30. Le premier relief 50, n'est pas visible sur la figure 2.

La figure 3, est une vue latérale du dispositif de support 10 de la figure 1.

On y distingue le premier relief 50, le deuxième relief 60, mais aussi un troisième relief 70. Le troisième relief 70 est formé sur la première face 12 du dispositif de support 10 au voisinage de la jonction du corps de lanière 18 et de l'appendice proximal 22. Une distance entre le troisième relief 70, et en particulier la distance entre une troisième butée 72 du troisième relief 70, tournée vers le passant 24, et le fond des gorges 28a, 28b formant l'épaulement 28 de l'appendice proximal 22, correspond à l'épaisseur de la lanière 16 en dehors des reliefs. Elle correspond notamment à l'épaisseur de la lanière au voisinage de son ajourage, mais en dehors du premier relief 50.

Par ailleurs, une distance entre la troisième butée 72 du troisième relief 70 et le passant 24, et plus précisément la fente 26 du passant 24, est égale, à la somme de l'épaisseur de la lanière 16 et de la hauteur du premier relief 50 considéré depuis la surface de la lanière.

On peut noter également, sur la figure 3, que le deuxième relief 60 présente, à l'opposé de la deuxième butée 62, une forme en coin s'effilant en direction de l'extrémité distale 30. La forme en coin présente une face supérieure avec un cintrage 64 destiné à appuyer le deuxième relief 60 sur un barreau ou un tube à section circulaire, auquel le dispositif de fixation doit être fixé.

La figure 4 montre le dispositif de support 10 en position d'utilisation. Le corps de lanière 18 forme une boucle circulaire autour d'un tube ou d'un barreau. Par simplification, le barreau n'est pas représenté sur la figure 4.

L'appendice proximal 22 traverse l'ajourage, non visible, de la lanière 16. L'appendice proximal 22 se trouve désormais au voisinage de l'appendice distal 32 avec laquelle il forme sensiblement un angle droit. La position en angle droit est assurée essentiellement par la deuxième butée 60 et en particulier par son cintrage 64 qui s'appuie sur un barreau à section circulaire. En effet, le cintrage 64 se trouve ici dans le prolongement de la boucle formée par le corps de lanière 18.

Le premier relief 50 se trouve sous le passant 24 en appui contre la troisième butée 72 du troisième relief 70. L'ensemble formé par le premier relief 50 et le troisième relief confère une rigidité plus grande au dispositif de support au droit du passant 24. Il permet également de maintenir l'appendice distal 32 dans une position perpendiculaire à l'appendice proximal 22, au doit du passant 24.

La figure 5 montre une paire de lunettes L accrochée à un dispositif de support 10 conforme à l'invention en position d'utilisation. Le dispositif de support de la figure 5 ne diffère que peu de celui de la figure 4.

Une branche de la paire de lunettes est engagée dans la fente 26 du passant 24, de préférence lorsque l'appendice proximal 22 occupe une position sensiblement horizontale. On peut noter que la branche de lunettes se trouve en appui simultanément sur la première butée 52 du premier relief, et sur la deuxième butée 62 du deuxième relief. Le cintrage 64 du deuxième relief permet d'appuyer le deuxième relief directement sur le barreau ou le tube (non représentés) autour duquel est fixé le corps de lanière 18. Par ailleurs, le premier relief 50 se trouve adossé contre le troisième relief 70.

Cette configuration permet d'éviter tout mouvement de balancement de la paire de lunettes L dans le passant 24.

La figure 6 est une perspective d'un dispositif de support 10 conforme à l'invention en position d'utilisation et illustre une variante de réalisation.

On peut noter que le deuxième relief 60 comprend deux nervures tournées vers l'appendice distal 32, les nervures présentant le cintrage 64 susceptible d'être appliqué contre un tube ou un barreau de fixation du dispositif de support. Les nervures formant le cintrage 64 s'étendent de manière adjacente aux brins 18a, 18b du corps de lanière 18 engagées dans les gorges 28a, 28b de l'épaulement que forme l'appendice proximal 22 avec le corps de lanière.

## Revendications

1. Dispositif de support (10) pour lunettes, présentant une première face (12) et une deuxième face (14) opposée à la première face (12), et comprenant :
- une lanière (16) avec une extrémité proximale (20) et une extrémité distale (30),
- un appendice proximal (22) de la lanière (16) et un appendice distal (32) de la lanière (16) formant respectivement l'extrémité proximale (20) et l'extrémité distale (30) de la lanière (16), l'appendice proximal (22) et l'appendice distal (32) étant reliés par un corps de lanière (18),
- un passant (24) pour branche de lunettes pratiqué dans l'appendice proximal (22),
- au moins un ajourage (40, 40a, 40b) d'au moins l'un du corps de lanière (18) et de l'appendice distal (32) de la lanière (16) autorisant un engagement de l'appendice proximal (22) de la lanière (16) au travers du corps de lanière (18), respectivement de l'appendice distal de la lanière (32),
- un verrou de maintien (18a, 18b, 28, 28a, 28b, 42, 42a, 42b) de l'appendice proximal (22) au travers dudit ajourage (40, 42a, 42b), dans une position d'utilisation du dispositif de support (10),
**caractérisé en ce que** le dispositif comprend au moins un premier relief (50) formant une butée d'immobilisation (52) de branche de lunettes au voisinage du passant (24) dans ladite position d'utilisation du dispositif de support (10), le premier relief étant ménagé sur la première face (12) du dispositif de support (10), en formant une saillie sur la première face (12), à l'aplomb d'un bord distal (42) de l'ajourage (40) tourné vers l'extrémité distale (30) de la lanière (16).

2. Dispositif selon la revendication 1, dans lequel le verrou de maintien (18a, 18b, 28, 28a, 28b, 42, 42a, 42b) de l'appendice proximal comprend un épaulement (28) de l'appendice proximal (22) faisant saillie sur le corps de lanière (18).

3. Dispositif selon la revendication 2, dans lequel le premier relief (50) présente, par rapport à la première face (12) du dispositif de support (10) une hauteur sensiblement égale à une distance séparant l'épaulement (28) de l'appendice proximal (22), du passant (24) pour branche de lunettes.

4. Dispositif selon l'une quelconque des revendications précédentes, comprenant un deuxième relief (60), le deuxième relief (60) étant ménagé sur la deuxième face (14) du dispositif de support (10), et formant une deuxième butée (62) à l'aplomb du passant (24).

5. Dispositif selon l'une quelconque des revendications 2 et 3, comprenant un troisième relief (70), ménagé sur la première face (12) du dispositif de support (10) au voisinage d'une jonction du corps de lanière (18) avec l'appendice proximal (22), une distance séparant le troisième relief (70) de l'épaulement (28) de l'appendice proximal (22) étant égale à une épaisseur de la lanière (16) au voisinage de l'ajourage (40, 40a, 40b), le troisième relief (70) formant un étai de l'appendice distal (32) au droit du premier relief (50) dans la position d'utilisation du dispositif de support (10).

6. Dispositif selon la revendication 4, dans lequel le deuxième relief (60) présente une forme en coin avec une hauteur de relief diminuant à l'opposé de la deuxième butée (62) du deuxième relief (60).

7. Dispositif selon la revendication 6, dans lequel la forme en coin présente un cintrage (64) avec un rayon de courbure égal à celui d'un tube de fixation auquel est destiné le dispositif.

8. Dispositif selon l'une quelconque des revendications précédentes, dans lequel le corps de lanière (18) présente deux brins de lanière (18a, 18b) disjoints, et dans lequel un espace entre les brins de lanière (18a, 18b) forme ledit ajourage (40, 40a, 40b).

9. Dispositif selon les revendications 2 et 8, dans lequel l'épaulement (28) de l'appendice proximal (22) est pourvu de gorges (28a, 28b) de réception des brins de lanière (18a, 18b).

10. Dispositif selon l'une quelconque des revendications précédentes, dans lequel l'appendice proximal (22), l'appendice distal (32) et le corps de lanière (18) sont réalisés d'une seule pièce.

11. Dispositif selon la revendication 10, réalisé en un matériau élastique choisi parmi un plastique souple, un élastomère, une silicone, une résine et du caoutchouc.

12. Dispositif selon l'une quelconque des revendications précédentes, dans lequel le passant (24) pour branche de lunettes comprend une fente (26) à lèvres (26a, 26b) traversant l'appendice proximal (22) de part en part.

13. Dispositif selon l'une quelconque des revendications précédentes, adapté à un barreau ou un tube d'un véhicule, en particulier le guidon d'un vélo, dans lequel le corps de lanière (18) présente une longueur égale par valeurs inférieures à un périmètre d'une section droite du barreau ou du tube.

## Patentansprüche

1. Brillenhaltervorrichtung (10), die eine erste Fläche (12) und eine zweite Fläche (14) gegenüber der ersten Fläche (12) aufweist und umfasst:
- ein Band (16) mit einem proximalen Ende (20) und einem distalen Ende (30),
- einen proximalen Anhang (22) des Bandes (16) und einen distalen Anhang (32) des Bandes (16), die jeweils das proximale Ende (20) und das distale Ende (30) des Bandes (16) bilden, wobei der proximale Anhang (22) und der distale Anhang (32) durch einen Bandkörper (18) verbunden sind,
- einen Durchgang (24) für Brillenbügel, der in den proximalen Anhang (22) eingearbeitet ist,
- mindestens einen Durchbruch (40, 40a, 40b) durch mindestens einen von dem Bandkörper (18) und dem distalen Anhang (32) des Bandes (16), der ein Führen des proximalen Anhangs (22) des Bandes (16) durch den Bandkörper (18) beziehungsweise den distalen Anhang des Bandes (32) gestattet,
- einen Halteriegel (18a, 18b, 28, 28a, 28b, 42, 42a, 42b) des proximalen Anhangs (22) durch den Durchbruch (40, 42a, 42b) in einer Benutzungsposition der Haltervorrichtung (10),
**dadurch gekennzeichnet, dass** die Vorrichtung mindestens ein erstes Relief (50) umfasst, das einen Arretierungsanschlag (52) für einen Brillenbügel in der Nähe des Durchgangs (24) in der Benutzungsposition der Haltervorrichtung (10) bildet, wobei das erste Relief auf der erste Fläche (12) der Haltervorrichtung (10) eingerichtet ist, indem es einen Vorsprung auf der ersten Fläche (12) lotrecht zu einem distalen Rand (42) des Durchbruchs (40) bildet, der zum distalen Ende (30) des Bandes (16) zeigt.

2. Vorrichtung nach Anspruch 1, wobei der Halteriegel (18a, 18b, 28, 28a, 28b, 42, 42a, 42b) des proximalen Anhangs einen Absatz (28) des proximalen Anhangs (22) umfasst, der über dem Bandkörper (18) hervorsteht.

3. Vorrichtung nach Anspruch 2, wobei das erste Relief (50) im Verhältnis zur ersten Fläche (12) der Haltervorrichtung (10) eine Höhe aufweist, die etwa einem Abstand entspricht, der den Absatz (28) des proximalen Anhangs (22) vom Durchgang (24) für Brillenbügel trennt.

4. Vorrichtung nach einem der vorangehenden Ansprüche, die ein zweites Relief (60) umfasst, wobei das zweite Relief (60) auf der zweiten Fläche (14) der Haltervorrichtung (10) eingerichtet ist und einen zweiten Anschlag (62) lotrecht zum Durchgang (24) bildet.

5. Vorrichtung nach einem der Ansprüche 2 und 3, die ein drittes Relief (70) umfasst, das auf der ersten Fläche (12) der Haltervorrichtung (10) in der Nähe einer Verbindung des Bandkörpers (18) mit dem proximalen Anhang (22) eingerichtet ist, wobei ein Abstand, der das dritte Relief (70) vom Absatz (28) des proximalen Anhangs (22) trennt, gleich einer Dicke des Bandes (16) in der Nähe des Durchbruchs (40, 40a, 40b) ist, wobei das dritte Relief (70) in der Benutzungsposition der Haltervorrichtung (10) eine Strebe des distalen Anhangs (32) gegenüber dem ersten Relief (50) bildet.

6. Vorrichtung nach Anspruch 4, wobei das zweite Relief (60) eine Eckform mit einer Reliefhöhe aufweist, die gegenüber dem zweiten Anschlag (62) des zweiten Reliefs (60) abnimmt.

7. Vorrichtung nach Anspruch 6, wobei die Eckform eine Biegung (64) mit einem Krümmungsradius aufweist, die gleich dem eines Befestigungsrohrs ist, für das die Vorrichtung bestimmt ist.

8. Vorrichtung nach einem der vorangehenden Ansprüche, wobei der Bandkörper (18) zwei getrennte Bandstränge (18a, 18b) aufweist und wobei ein Raum zwischen den Bandsträngen (18a, 18b) den Durchbruch (40, 40a, 40b) bildet.

9. Vorrichtung nach den Ansprüchen 2 und 8, wobei der Absatz (28) des proximalen Anhangs (22) mit Nuten (28a, 28b) zur Aufnahme der Bandstränge (18a, 18b) versehen ist.

10. Vorrichtung nach einem der vorangehenden Ansprüche, wobei der proximale Anhang (22), der distale Anhang (32) und der Bandkörper (18) aus einem einzigen Teil hergestellt sind.

11. Vorrichtung nach Anspruch 10, die aus einem elastischen Material hergestellt ist, das aus einem elastischen Kunststoff, einem Elastomer, einem Silikon, einem Harz und Gummi ausgewählt ist.

12. Vorrichtung nach einem der vorangehenden Ansprüche, wobei der Durchgang (24) für Brillenbügel einen Schlitz (26) mit Lippen (26a, 26b) umfasst, der den proximalen Anhang (22) von einer Seite zur anderen durchquert.

13. Vorrichtung nach einem der vorangehenden Ansprüche, die an eine Stange oder ein Rohr eines Fahrzeugs, insbesondere den Lenker eines Fahrrads, angepasst ist, wobei der Bandkörper (18) eine Länge aufweist, die gemäß unteren Werten gleich einem Umfang eines geraden Querschnitts der Stange oder des Rohrs ist.

## Claims

1. A spectacle support device (10), having a first face (12) and a second face (14) which is opposite to the first face (12), and comprising:
- a strap (16) with a proximal end (20) and a distal end (30),
- a proximal appendage (22) of the strap (16) and a distal appendage (32) of the strap (16) forming respectively the proximal end (20) and the distal end (30) of the strap (16), the proximal appendage (22) and the distal appendage (32) being connected by a strap body (18),
- a loop (24) for spectacle arm made in the proximal appendage (22),
- at least one aperture (40, 40a, 40b) of at least one of the strap body (18) and the distal appendage (32) of the strap (16) enabling an engagement of the proximal appendage (22) of the strap (16) through the strap body (18), respectively of the distal appendage of the strap (32),
- a lock (18a, 18b, 28, 28a, 28b, 42, 42a, 42b) for retaining the proximal appendage (22) through said aperture (40, 40a, 40b), in a position of use of the support device (10),
**characterised in that** the device comprises at least one first relief (50) forming a stop (52) for immobilising the spectacle arm in the vicinity of the loop (24) in said position of use of the support device (10), the first relief being formed on the first face (12) of the support device (10), by forming a protrusion on the first face (12), in vertical alignment with a distal edge (42) of the aperture (40) facing the distal end (30) of the strap (16).

2. The device according to claim 1, wherein the retaining lock (18a, 18b, 28, 28a, 28b, 42, 42a, 42b) of the proximal appendage comprises a shoulder (28) of the proximal appendage (22) protruding on the strap body (18) .

3. The device according to claim 2, wherein the first relief (50) has, relative to the first face (12) of the support device (10), a height substantially equal to a distance separating the shoulder (28) from the proximal appendage (22), of the loop (24) for spectacle arm.

4. The device according to any one of the preceding claims, comprising a second relief (60), the second relief (60) being formed on the second face (14) of the support device (10), and forming a second stop (62) in vertical alignment with the loop (24).

5. The device according to any one of claims 2 and 3, comprising a third relief (70), formed on the first face (12) of the support device (10) in the vicinity of a junction of the strap body (18) with the proximal appendage (22), a distance separating the third relief (70) from the shoulder (28) of the proximal appendage (22) being equal to a thickness of the strap (16) in the vicinity of the aperture (40, 40a, 40b), the third relief (70) forming a strut of the distal appendage (32) in line with the first relief (50) in the position of use of the support device (10).

6. The device according to claim 4, wherein the second relief (60) has a wedge shape with a relief height decreasing opposite to the second stop (62) of the second relief (60).

7. The device according to claim 6, wherein the wedge shape has a bending (64) with a radius of curvature equal to that of a fastening tube for which the device is intended.

8. The device according to any one of the preceding claims, wherein the strap body (18) has two disjoint strap strands (18a, 18b), and wherein a space between the strap strands (18a, 18b) forms said aperture (40, 40a, 40b).

9. The device according to claims 2 and 8, wherein the shoulder (28) of the proximal appendage (22) is provided with grooves (28a, 28b) for receiving the strap strands (18a, 18b).

10. The device according to any one of the preceding claims, wherein the proximal appendage (22), the distal appendage (32) and the strap body (18) are made in one piece.

11. The device according to claim 10, made of an elastic material selected from a flexible plastic, an elastomer, a silicone, a resin and rubber.

12. The device according to any one of the preceding claims, wherein the loop (24) for spectacle arm comprises a slot (26) with lips (26a, 26b) passing right through the proximal appendage (22).

13. The device according to any one of the preceding claims, adapted to a bar or a tube of a vehicle, in particular the handlebars of a bicycle, wherein the strap body (18) has a length equal by values less than a perimeter of a straight section of the bar or the tube.
